(19) Europäisches Patentamt / European Patent Office / Office européen des brevets

(11) **EP 3 916 675 B1**

(12) **EUROPEAN PATENT SPECIFICATION**

(45) Date of publication and mention
of the grant of the patent:
**14.05.2025 Bulletin 2025/20**

(21) Application number: **19912034.6**

(22) Date of filing: **03.12.2019**

(51) International Patent Classification (IPC):
**G06T 7/254** (2017.01)   **G06T 5/00** (2024.01)
**G06T 5/50** (2006.01)

(52) Cooperative Patent Classification (CPC):
**G06T 7/254; G06T 5/50; G06T 5/92; H04N 5/144;
H04N 23/10; H04N 23/71; H04N 23/73;
H04N 23/76;** G06T 2207/10016

(86) International application number:
**PCT/JP2019/047136**

(87) International publication number:
**WO 2020/152997 (30.07.2020 Gazette 2020/31)**

(54) **IMAGE PROCESSING SYSTEM AND CAMERA SYSTEM**

BILDVERARBEITUNGSSYSTEM UND KAMERASYSTEM

SYSTÈME DE TRAITEMENT D'IMAGE ET SYSTÈME DE CAMÉRA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2019   JP 2019009090**

(43) Date of publication of application:
**01.12.2021   Bulletin 2021/48**

(73) Proprietor: **Hitachi Astemo, Ltd.
Ibaraki 312-8503 (JP)**

(72) Inventors:
• **KOBAYASHI Masayuki
Tokyo 100-8280 (JP)**
• **TAKEMURA Masayuki
Tokyo 100-8280 (JP)**
• **GOMEZCABALLERO Felipe
Tokyo 100-8280 (JP)**

(74) Representative: **MERH-IP Matias Erny Reichl
Hoffmann
Patentanwälte PartG mbB
Paul-Heyse-Straße 29
80336 München (DE)**

(56) References cited:
JP-A- 2004 274 325     JP-A- 2004 274 325
JP-A- 2013 117 514     US-A1- 2014 270 532

EP 3 916 675 B1

## Description

Technical Field

The present invention relates to an image processing system and a camera system.

Background Art

Various techniques for detecting an object moving in an image based on an image or the like captured by a camera are known. Examples of such techniques are described in PTL 1 and PTL 2.

The technique described in PTL 1 describes that "as processing means for tracking a moving object, there are background difference processing means and template matching processing means, and these two tasks of processing are appropriately switched based on an illumination variation detection result of a monitoring region by environment variation detection means and stability of a background image stored in a storage unit.", "when the environment variation detection means detects an illumination variation in the monitoring region, tracking processing switching means continues tracking the moving object by switching tracking processing of the moving object from background difference processing to main template matching processing and compensates for illumination of an input image.", and "in a background difference processing method, the stability of the extraction of the moving object is excellent, and a processing load is also small. However, when the input image is in an unstable state due to the illumination variation, the background difference processing cannot be performed. The same applies to the template matching processing, but the template matching processing can be executed by compensating for the input image and obtaining an image of which a luminance value is approximated to an image before the change. On the other hand, in the background difference processing, even though the illumination compensation is performed, since the correction cannot be accurately performed in all pixels, even a region other than the moving object is extracted as a background difference region, and thus, it is difficult to perform the background difference processing".

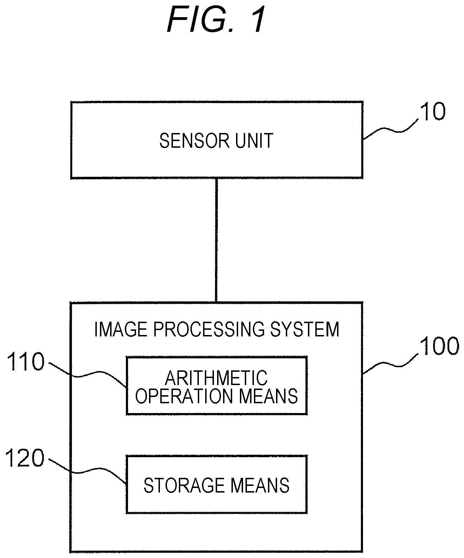

Furthermore, PTL 2 describes that "when a background image is recreated in response to an illuminance change, a luminance value of an image (P2 in FIG. 1(C)) in a region in which a background cannot be created due to being blocked by a moving object is estimated as a likely value of the background image to be used after the illuminance change by a conversion equation (converting the luminance value before the illuminance change into the value after the change) obtained as an approximate equation from a relationship between the luminance values of the same pixel position in both the background image before the illuminance change (FIG. 1(A)) and the captured image at the illuminance after the change (FIG. 1(B)), and is complemented with the obtained estimation value.".

PTL 3 discloses an object extraction method in which an extraction target included in an input image is extracted from a difference image which can be obtained by differentiating the input image photographed by an image pickup device, in which the same background is made as an image pickup region, and the existing reference background image regarding a luminance value of each pixel.

Citation List

Patent Literature

    PTL 1: JP 2011-060167 A
    PTL 2: JP 2011-070572 A
    PTL 3: JP 2004 274325 A

Summary of Invention

Technical Problem

Techniques in the related art have problems that it is difficult to detect an object in a background difference type when an exposure condition of a camera changes.

For example, in the technique of PTL 1, when an illumination condition of the input image changes, the background difference type is switched not to be used for object detection. Furthermore, in the technique of PTL 2, it is necessary to prepare the background image as a reference in advance, and an application range is limited. For example, it is not possible to cope with a case where the camera moves or an orientation of the camera changes.

The present invention has been made in view of the above problems, and an object of the present invention is to provide an image processing system and a camera system capable of appropriately detecting an object in a background difference type even when an exposure condition of a camera changes.

Solution to Problem

The invention is set out in the appended set of claims. In particular, an image processing system according to the present invention is defined in claim 1.

The present specification includes the content disclosed in Japanese Patent Application No. 2019-009090, which is a priority document of the present application.

Advantageous Effects of Invention

According to the image processing system and the camera system of the present invention, the object can be appropriately detected in the background difference type even though the exposure condition of the camera changes. Thus, for example, even an in-vehicle camera that needs to be operated while changing the exposure condition can appropriately detect the moving object.

Brief Description of Drawings

[FIG. 1] FIG. 1 is a block diagram illustrating an example of a configuration of a camera system according to a first embodiment which is not encompassed by the wording of the claims but is considered useful for understanding of the invention.

[FIG. 2] FIG. 2 is a block diagram illustrating an example of a configuration of an image processing system in FIG. 1.

[FIG. 3] FIG. 3 is a diagram illustrating a specific example of an arithmetic operation of a luminance value by a luminance correction unit in FIG. 2.

[FIG. 4] FIG. 4 is a diagram illustrating an object detection principle by a background difference type.

[FIG. 5] FIG. 5 is a diagram illustrating an object detection principle by a background difference type without using a background image of a moving object that is not captured.

[FIG. 6] FIG. 6 is a diagram for describing correction of luminance when object detection processing is continuously performed over three or more images.

[FIG. 7] FIG. 7 is a block diagram illustrating an example of a configuration of a camera system according to a second embodiment of the present invention.

[FIG. 8] FIG. 8 is a diagram for describing a field angle of view of a sensor unit according to a stereo camera according to the second embodiment.

[FIG. 9] FIG. 9 is a block diagram illustrating an example of a configuration of an image processing system according to the second embodiment.

[FIG. 10] FIG. 10 is a diagram for describing an example of a bitwise operation by a luminance correction unit according to the second embodiment.

[FIG. 11] FIG. 11 is a block diagram illustrating an example of a more detailed configuration of a background difference type object detection unit.

[FIG. 12] FIG. 12 is a block diagram illustrating an example of a more detailed configuration of a parallax type object detection unit.

Description of Embodiments

Hereinafter, embodiments of the present invention will be described with reference to the accompanying drawings.

[First Embodiment is not encompassed by the wording of the claims but is considered useful for understanding of the invention]

An image processing system according to a first embodiment of the present invention performs detection in an image (for example, a shutter image captured by a camera) in a background difference type, and can detect, for example, a moving object. The "moving object" refers to an object moving on a background. However, the "background" is not limited to a region including pixels that do not change in the image. For example, in the case of an in-vehicle camera that performs forward sensing, a road surface is an example of the background, and a pedestrian or a vehicle that moves on the road surface is an example of the moving object. For example, in the case of a fixed monitoring camera, a person, an animal, an object to be moved, and the like moving in a camera image are examples of the moving object.

FIG. 1 is a block diagram illustrating an example of a configuration of a camera system according to the present embodiment. The camera system includes a sensor unit 10 and an image processing system 100. The sensor unit 10 and the image processing system 100 are connected to be able to communicate with each other. The sensor unit 10 is an imaging unit including an imaging sensor, and is, for example, a known camera. A lens is attached to the imaging sensor, and captures an outside of the device. The imaging sensor is, for example, an imaging sensor including a complementary metal oxide semiconductor (CMOS), and converts light into an electric signal.

Information converted into the electric signal by the imaging sensor of the sensor unit 10 is further converted into image data representing an image in the sensor unit 10. The image data includes a luminance value of a pixel. The luminance value can be expressed as, for example, a digital value, and is expressed as a luminance value for each color such as red, green, and blue (RGB) or red clear (RC) or a monochrome luminance value. The sensor unit 10 transmits the image data to the image processing system 100.

The sensor unit 10 has a function of changing an exposure condition of the imaging sensor. For example, an electronic shutter such as a global shutter or a rolling shutter is provided at the imaging sensor, and capturing can be performed with an exposure time set to an arbitrary time. In a case where a photodiode in which charges are accumulated when light is received is used as a light receiving element, the exposure time refers to a time from when the accumulated charges of the photodiode are reset until the charges are extracted in order to read out information related to the luminance value.

When the exposure time is lengthened, since a large amount of charges are accumulated, the luminance value to be read out is increased. On the other hand, when the exposure time is shortened, since the amount of accumulated charges is reduced, the luminance to be read out decreases. Thus, the brightness of the image obtained from the imaging sensor changes in correlation with the exposure time.

In the sensor unit 10, the amount of charges extracted from the photodiode is converted into a voltage, and a digital value is acquired by performing analog-to-digital (A/D) conversion. The sensor unit 10 includes an amplifier used for the A/D conversion, and may be configured such that a gain of the amplifier can be changed as a part of the exposure condition. In this case, the luminance value to be read out changes in accordance with the gain setting of the amplifier. The higher the gain, the higher the luminance value, and the lower the gain, the lower the luminance value.

Here, in general, when the luminance value decreases due to a change in the exposure condition (in the above example, the exposure time and the gain), a luminance value of a dark object may become zero, a luminance value of an object having a low contrast ratio may become uniform, or a contour, light and shade, and the like may not be discriminated. This problem is remarkable when the luminance value is expressed as a digital value, but the same problem may occur even when the luminance value is expressed as an analog value. Similarly, when the luminance value increases due to the change in the exposure condition, a luminance value of the bright object becomes a maximum value, and a contour of the object or a gradation of the object may not be discriminated. Accordingly, it is necessary to set the exposure condition in accordance with the brightness of the object to be captured.

The sensor unit 10 can capture a moving image by repeatedly releasing the electronic shutter in a sequence of time and acquiring image data for each shutter. The number of times the image data is output by releasing the electronic shutter per unit time is referred to as a frame rate, and a frame rate per second is represented in units of frame per second (FPS). The sensor unit 10 transmits data including the image data to the image processing system 100.

The image processing system 100 receives the data including the image data from the sensor unit 10 and detects the object in the image by processing the data. The object is detected in the background difference type, and thus, for example, the moving object can be detected.

The image processing system 100 has a configuration as a known computer, and includes arithmetic operation means 110 and storage means 120. The arithmetic operation means 110 includes, for example, a microprocessor, and the storage means 120 includes, for example, a semiconductor memory and a magnetic disk.

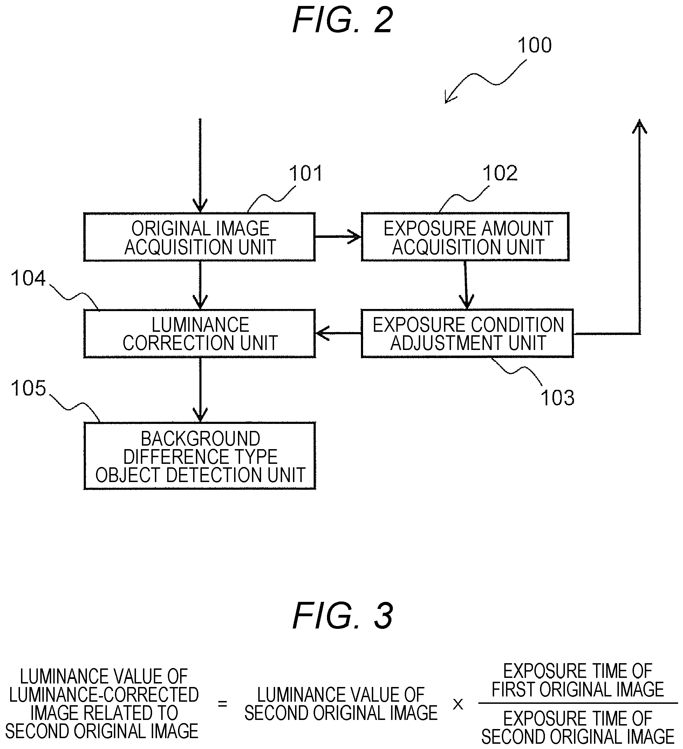

FIG. 2 is a block diagram illustrating an example of a configuration of the image processing system 100. The arithmetic operation means 110 of the image processing system 100 functions as an original image acquisition unit 101, an exposure amount acquisition unit 102, an exposure condition adjustment unit 103, a luminance correction unit 104, and an object detection unit 105 by executing a program stored in the storage means 120 or another location.

The original image acquisition unit 101 acquires an image from the sensor unit 10. The image is, for example, a shutter image of the camera. The image acquired here is an image before the adjustment and correction to be described below, and thus, the image is referred to as an "original image" below. The original image acquisition unit 101 can acquire a plurality of original images related to different times. The images related to different times are, for example, images related to different shutters or different shutter times from one imaging sensor. For example, when the sensor unit 10 continuously outputs a plurality of images representing a moving image, the original image acquisition unit 101 sequentially acquires these images.

The exposure amount acquisition unit 102 acquires an exposure amount related to the original image acquired by the original image acquisition unit 101. The exposure amount is, for example, an amount indicating how much light the imaging sensor of the sensor unit 10 is exposed to in the same shutter. The expression form and acquisition method of the exposure amount can be appropriately designed by those skilled in the art based on a known technique.

The exposure amount may be acquired by any method. For example, an exposure meter provided in the sensor unit 10 may output information related to the exposure amount, and the exposure amount acquisition unit 102 may receive the information and may acquire the exposure amount. In another method, the exposure amount acquisition unit 102 can acquire the exposure condition by calculating the exposure condition based on the original image. In a more specific example, when the CMOS is used as the imaging sensor of the sensor unit 10, the exposure amount may be calculated based on a height of the luminance value of specific one or more pixels or all pixels of the original image.

The exposure condition adjustment unit 103 adjusts the exposure condition related to the original image. This adjustment is performed by transmitting an instruction and information for changing the exposure condition to the sensor unit 10. As a more specific example, the exposure condition is adjusted, for example, by adjusting the exposure time and the gain of the CMOS.

The exposure condition is adjusted, for example, based on the exposure amount. Furthermore, the exposure condition is adjusted such that the exposure amount of the original image is maintained at a predetermined constant value, for example. As a specific example, when the luminance value of one or more specific pixels or all pixels of the CMOS is higher than a predetermined reference value, the luminance value of the next shutter is lowered by shortening the exposure time of the sensor unit 10 or reducing the gain. Furthermore, when the luminance value of one or more specific pixels or all pixels of the CMOS is lower than the predetermined reference value, the exposure time is lengthened, or the gain is increased.

The exposure condition adjustment unit 103 transmits information indicating the adjusted exposure condition to the luminance correction unit 104. The exposure condition is associated with each original image, for example. For example, the exposure condition adjustment unit 103 instructs the sensor unit 10 to set the exposure condition to a certain value, and when a certain original image is captured under the exposure condition, the exposure condition is associated with the original image.

The luminance correction unit 104 acquires the original image from the original image acquisition unit 101 and acquires the exposure condition related to the original image from the exposure condition adjustment unit 103. The luminance correction unit 104 changes the luminance value of the original image based on the exposure condition. A specific example of processing of changing the luminance value will be described below.

First, the luminance correction unit 104 corrects a variation in sensitivity of the sensor unit 10 for each pixel. The luminance correction unit 104 corrects the variation based on sensitivity information regarding a light amount of each pixel of the imaging sensor stored in advance in the storage means 120. The sensitivity information is information indicating a relationship of whether a luminance value corresponds to a certain light amount.

The storage means 120 stores the sensitivity information. The sensitivity information can be created by any method. For example, an object having uniform brightness is captured by the sensor unit 10 in advance, a luminance value of each pixel at this time is checked, and the sensitivity information can be generated based on the luminance value. In the capturing at this time, for example, a pure white low-reflection plate-like object is captured so as to spread over the entire field of view. Such sensitivity correction by the luminance correction unit 104 may be omitted. In this case, the creation of the sensitivity information can be omitted.

Next, the luminance correction unit 104 corrects the luminance value in accordance with the exposure conditions of the plurality of original images. For example, a new image is acquired by correcting the luminance value of the second original image such that a difference in the luminance value from the first original image decreases in accordance with the exposure condition related to the first original image and the exposure condition related to the second original image. Hereinafter, the new image is referred to as a "luminance-corrected image".

In other words, the correction is performed such that the luminance values of the plurality of original images become values closer to each other. Alternatively, any one of the plurality of original images may be used as a reference (first original image), and the luminance value of the other original image (second original image) may be corrected to be close to the reference. More specifically, the correction may be performed such that the luminance values coincide with each other, or the correction may be performed such that the luminance values become values within a range similar to each other.

The definition of the "luminance value" regarding a certain image can be appropriately decided by those skilled in the art. For example, the luminance value of a specific pixel of a certain image may be used, or the luminance value of the image may be calculated by performing statistical processing (averaging or the like) on the luminance values of all the pixels.

For example, in a case where the exposure condition includes information indicating the exposure time, when the exposure time at the time of capturing the second original image is longer than the exposure time at the time of capturing the first original image, the luminance value of the second original image is corrected to be low. Conversely, when the exposure time of the second original image is shortened, the luminance value of the second original image is corrected to be high.

Furthermore, in a case where the exposure condition includes information indicating the gain, when the gain at the time of capturing the second original image is higher than the gain at the time of capturing the first original image, the luminance value of the second original image is corrected to be low. Conversely, when the gain of the second original image decreases, the luminance value of the second original image is corrected to be high.

FIG. 3 illustrates a specific example of the arithmetic operation of the luminance value by the luminance correction unit 104. In this example, the luminance correction unit 104 multiplies the luminance value of the second original image by a ratio of the exposure time related to the first original image to the exposure time related to the second original image. Such arithmetic operation is suitable when the imaging sensor has linear sensitivity to the light amount. For example, when the exposure time of the first original image is 1 ms and the exposure time of the second original image is 2 ms, the ratio between the exposure times is 1/2, and the luminance value of the second image is multiplied by 1/2. It can be said that such multiplication of the ratio is an example of the correction for setting the difference in the luminance value from the first original image to be zero. In this example, the exposure condition is only the exposure time, but the gain or other information may be used instead of or in addition to the exposure time.

In this example, although the original image captured first is the first original image and the original image captured later is the second original image to be corrected, an anteroposterior relationship therebetween is arbitrary. That is, the luminance value may be corrected by using the original image captured later as the first original image (reference) and the original image captured first as the second original image.

The ratio between the exposure times is multiplied in this manner, and thus, the difference in the luminance value can be more appropriately corrected.

The luminance correction unit 104 transmits the luminance-corrected image to the object detection unit 105. When there is no difference in the luminance value between the two original images or the difference is within a predetermined allowable range, the luminance correction unit 104 may omit the correction of the luminance value. In this case, the luminance correction unit 104 may directly transmit the original image to the object detection unit 105.

The object detection unit 105 detects the object by acquiring a background difference based on the luminance-corrected image received from the luminance correction unit 104. In particular, when the first original image and the luminance-corrected image obtained from the second original image are received from the luminance correction unit 104, the object is detected based on these two images. The specific processing in the background difference type can be appropriately designed by those skilled in the art, and an example will be described below.

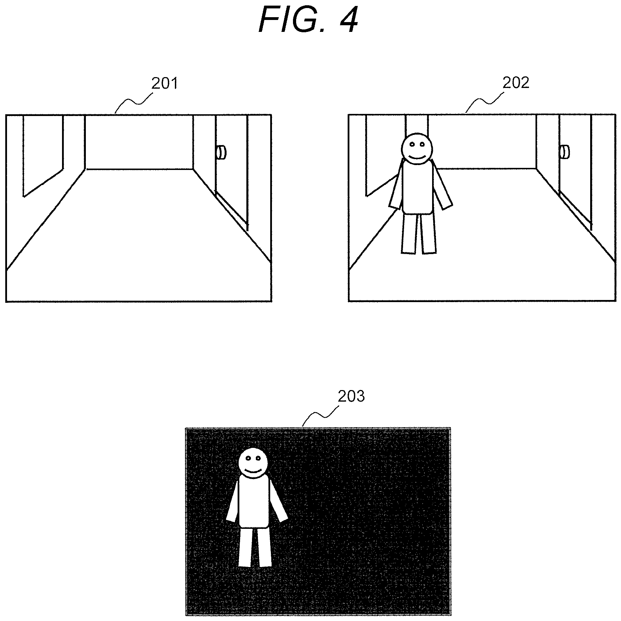

FIG. 4 illustrates an object detection principle in the background difference type. In the background difference type, the images of the plurality of shutters in a sequence of time are compared, and a pixel having a difference is output as a difference image. A difference image 203 is acquired based on a first original image 201 and a luminance-corrected image 202. In this example, the first original image 201 is a background image, and is an image in which the moving object does not appear. The luminance-corrected image 202 is a luminance-corrected image corresponding to the image of the latest shutter (second original image). A difference between the first original image 201 and the luminance-corrected image 202 is shown on the difference image 203. In this example, since the moving object is not included in the first original image 201 and the moving object is included in the luminance-corrected image, only the moving object can be detected as the difference on the difference image 203.

When the images of the preceding and following frames are compared, a reference background image may be used by dividing the image into a plurality of regions, collecting the regions where there is no difference, and combining the images of the different shutters. Such a reference background image may be stored in advance in the storage means 120 and may be used as the first original image. In a camera having a wide angle of view, it may be difficult to capture a moment at which the moving object is not included in any portion in the entire angle of view. Even in such a case, the reference background image can be generated by combining the divided regions as described above.

Furthermore, the image processing system 100 may have a function of updating the reference background image. The reference background image is frequently updated, and thus, a difference in brightness between the reference background image and the latest shutter image is reduced even at a location where the brightness changes with the lapse of time. Accordingly, an error remaining in the luminance-corrected image can be further reduced, and the background difference can be acquired with higher accuracy.

When the device of the present embodiment moves (for example, when the sensor unit 10 and the image processing system 100 are mounted on the vehicle), the background changes from moment to moment. In such a case, the difference image may be output by comparing the image related to the latest shutter (luminance-corrected image) with the image related to the shutter (first original image) at a time before the latest shutter.

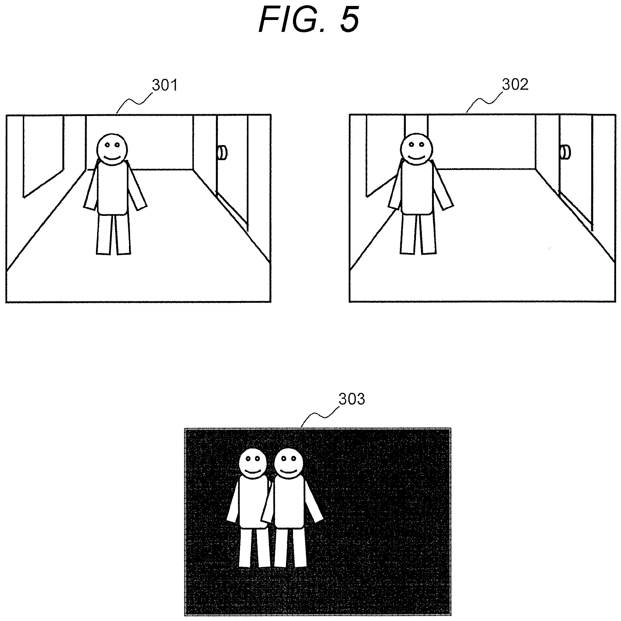

FIG. 5 illustrates the object detection principle in the background difference type without using the background image of the moving object that is not captured. According to this principle, for example, the moving object can be appropriately detected even when the sensor unit 10 moves. A first original image 301 is an image of a shutter at a time before the latest shutter. A luminance-corrected image 302 is an image generated by setting the image of the latest shutter as the original image (second original image) and correcting the luminance of the original image. A difference image 303 is acquired based on the first original image 301 and the luminance-corrected image 302. When both the first original image 301 and the luminance-corrected image 302 include a moving object, a difference occurs between pixels of portions where the moving object is captured in the images, and a difference does not occur between pixels of portions where the background is captured.

When the sensor unit 10 moves, there is a possibility that it is difficult to generate the background image or the background image cannot be generated frequently. However, the moving object can be detected by comparing the image related to the latest shutter with the image related to the shutter at the time before the latest shutter.

When the sensor unit 10 moves, a background portion moves on the image. In such a case, one or both of the images may be deformed, for example, like a case where one or both of the images is moved in parallel such that portions corresponding to the background overlap between the two images. In this manner, the difference in the background is suppressed, and thus, the difference can be acquired by focusing on the moving object.

The object detection unit 105 may further specify and output a range of pixels in which the moving object is present in the difference image. For example, a plurality of pixels at close distances among the pixels representing the moving object may be collected into one set, and a range in which the set is present may be set as a range in which the mobile body is present.

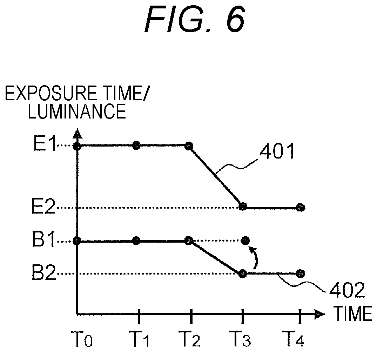

The correction of luminance when object detection processing is continuously performed over three or more images will be described with reference to FIG. 6. The images are acquired at times T0, T1, T2, T3, T4, ...,

and changes in an exposure time 401 and a luminance value 402 related to each image are shown. While time-series shutters are sequentially captured from time T0 to time T4, the exposure condition changes between time T2 and time T3, and the exposure time decreases from E1 to E2. Accordingly, the luminance value also decreases from B1 to B2.

Here, in the object detection by the conventional background difference processing, the luminance value is B1 and is constant until time T2, and the object can be correctly detected, but since the luminance value of the pixel of the entire image changes at time T3, the entire image is recognized as the object, and the object cannot be correctly detected.

On the other hand, in the first embodiment of the present invention, the correction is performed by the luminance correction unit 104. For example, when a difference between the image related to time T2 (first original image) and the image related to time T3 (second original image) is acquired, the image related to time T3 is corrected, and a luminance value is B1 on the luminance-corrected image. Thus, the object can be appropriately detected. In the example of FIG. 6, it is considered that the following equation is established using the mathematical expression of FIG. 3.

$$B1 = B2 \times (E1/E2)$$

Furthermore, the image processing system 100 may have a function of performing geometric transformation on the image. For example, aerial view conversion may be performed on the image. For example, in an image captured by viewing the road surface in aerial view, conversion may be performed such that the road surface is parallel to an image plane.

In the first embodiment, the moving object may be, for example, a pedestrian or a vehicle.

Furthermore, the image processing system 100 may further have a function of detecting the object regardless of the background difference type. That is, the image processing system 100 may include a non-background difference type object detection unit that detects an object based on any of the original images without acquiring the background difference. The non-background difference type object detection unit may be an object detection unit different from the background difference type object detection unit. In such a detection type, not only the moving object but also the object can be detected, and for example, a three-dimensional object can also be detected.

As described above, according to the image processing system 100 and the camera system according to the first embodiment of the present invention, the object can be appropriately detected in the background difference type even though the exposure condition of the camera changes. Thus, for example, it is possible to appropriately detect the moving object.

[Second Embodiment]

In the first embodiment, the number of imaging units in the sensor unit 10 is not particularly limited. In a second embodiment, the sensor unit is limited to a configuration including a plurality of imaging units.

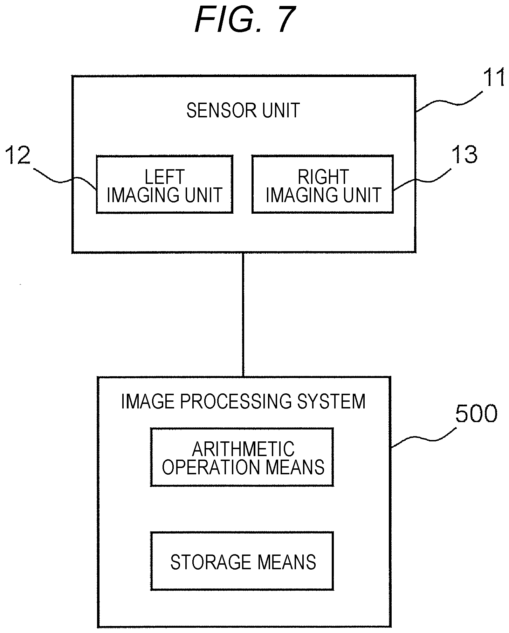

FIG. 7 is a block diagram illustrating an example of a configuration of a camera system according to the present embodiment. The camera system includes a sensor unit 11 and an image processing system 500. The sensor unit 11 includes a left imaging unit 12 and a right imaging unit 13, and is, for example, a known stereo camera. The left imaging unit 12 and the right imaging unit 13 are arranged at different positions to cause parallax. A hardware configuration of the image processing system 500 is similar to that of the first embodiment.

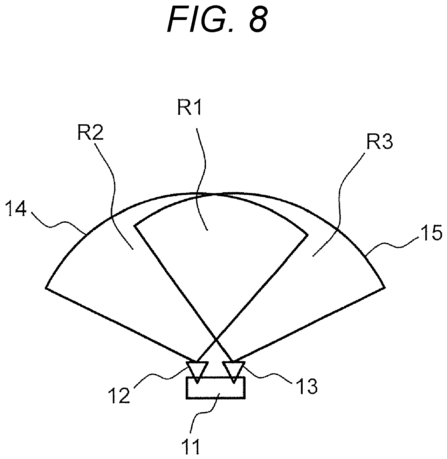

A field angle of view of the sensor unit 11 according to the stereo camera of the present embodiment will be described with reference to FIG. 8. The left imaging unit 12 images a left field of view region 14, and the right imaging unit 13 images a right field of view region 15. The left field of view region 14 and the right field of view region 15 partially overlap and are shifted from each other on the left and right. Thus, the original image includes a stereo region R1, a left monocular region R2, and a right monocular region R3. The stereo region is a region in which an angle of view of the original image related to the left imaging unit 12 and an angle of view of the original image related to the right imaging unit 13 overlap with each other. The monocular region is a region in which the angles of view do not overlap between the original image related to the left imaging unit 12 and the original image related to the right imaging unit 13. The stereo region R1, the left monocular region R2, and the right monocular region R3 do not overlap each other.

The image processing system 500 performs stereo matching type object detection in the stereo region R1, and performs background difference type object detection in the left monocular region R2 and the right monocular region R3. In the background difference type object detection, an aerial view image obtained by performing projective transformation on the road surface may be used. Background difference processing using the aerial view image is referred to as aerial view difference processing.

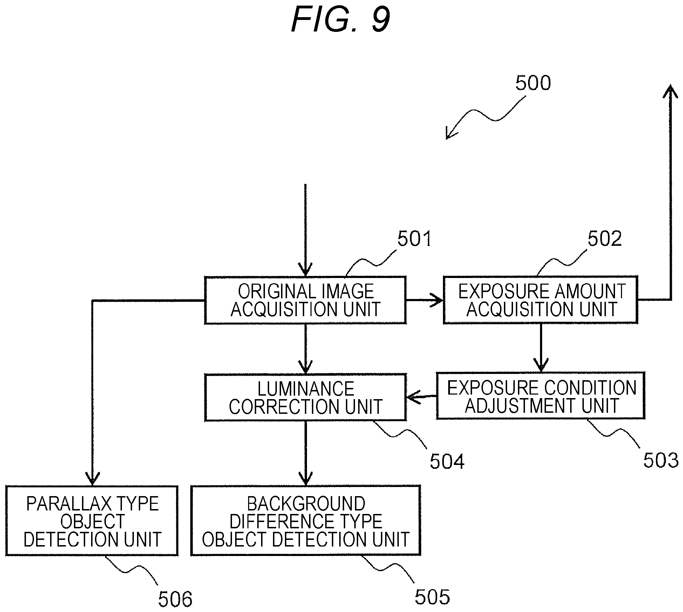

FIG. 9 is a block diagram illustrating an example of a configuration of the image processing system 500 according to the second embodiment. Arithmetic operation means of the image processing system functions as an original image acquisition unit 501, an exposure amount acquisition unit 502, an exposure condition adjustment unit 503, a luminance correction unit 504, a background difference type object detection unit 505, and a parallax type object detection unit 506 by executing a program stored in the storage means or another location. The parallax type object detection unit 506 is an example of the non-background difference type object detection unit that detects the object without acquiring the background difference. The parallax type object detection unit 506 may be an object detection unit different from the background difference type object detection unit 505.

The original image acquisition unit 501 acquires an image from the sensor unit 11. In the second embodiment, a plurality of original images related to different positions can be acquired from the left imaging unit 12 and the right imaging unit 13. More precisely, a first original image and a second original image can be obtained for a plurality of different positions, respectively. For example, a first original image and a second original image related to different shutters or different shutter times from the left imaging unit 12 are acquired, and a first original image and a second original image related to different shutters or different shutter times from the right imaging unit 13 are acquired.

Operations of the exposure amount acquisition unit 502, the exposure condition adjustment unit 503, and the background difference type object detection unit 505 are similar to those of the exposure amount acquisition unit 102, the exposure condition adjustment unit 103, and the object detection unit 105 of the first embodiment, respectively.

The luminance correction unit 504 corrects variations in sensitivity for pixels of imaging sensors of the left imaging unit 12 and the right imaging unit 13 as in the first embodiment. The luminance correction unit 504 generates a conversion coefficient for converting a luminance value of each pixel in accordance with an exposure condition. The conversion coefficient is calculated, for example, according to the mathematical expression of FIG. 3 as in the first embodiment.

The conversion at this time is performed so as to correspond to a plurality of original images related to the same position. That is, the luminance correction unit 504 corrects a luminance value of the second original image from the left imaging unit 12 such that a difference in the luminance value from the first original image from the left imaging unit 12 decreases, and corrects a luminance value of the second original image from the right imaging unit 13 such that a difference in luminance value from the first original image from the right imaging unit 13 decreases.

Subsequently, the luminance correction unit 504 executes predetermined conversion in relation to the luminance correction processing described in the first embodiment. This conversion can be performed, for example, as a bitwise operation. For example, the luminance correction unit 504 converts a luminance value of the original image represented by a predetermined number of initial bits (for example, luminance values of all pixels) into a luminance value having the same number of bits as the number of initial bits or a luminance value having the number of bits smaller than the number of initial bits in accordance with the conversion coefficient. This conversion may be, for example, an arithmetic operation of shifting bits by the number of bits corresponding to the conversion coefficient, an arithmetic operation of extracting only bits corresponding to the conversion coefficient among the bits and discarding other bits, or an arithmetic operation combining thereof.

Since the number of bits of the luminance value used for detecting the object is substantially reduced by the conversion for reducing the number of bits in this manner, it is possible to perform high-speed processing with a small processing load. Furthermore, this conversion is performed as a bit shift operation, and thus, arithmetic operation processing becomes simple. Accordingly, higher-speed processing can be performed.

Furthermore, this conversion can also be performed by using a conversion table stored in advance in the storage means. The conversion table associates different output values with input values of the luminance values in accordance with the conversion coefficient.

An example of a case where the luminance correction unit 504 performs conversion as a bitwise operation will be described below.

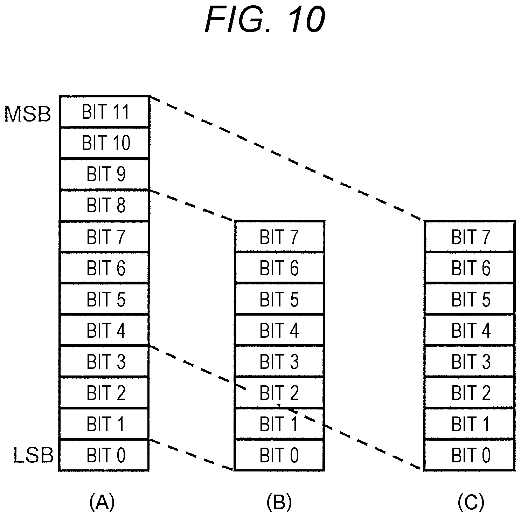

FIG. 10 is a diagram for describing an example of the bitwise operation. In this example, endianness in which high-order digit bits are arranged in the MSB is assumed. In the other case (for example, a case where endianness in which the high-order digit bits are arranged in the LSB), a person skilled in the art can appropriately change the arrangement of the bits (for example, the MSB side and the LSB side are exchanged in FIG. 10). The luminance correction unit 504 performs the bitwise operation illustrated in FIG. 10 on the luminance value in each of the original images acquired from the original image acquisition unit 501. Furthermore, when the luminance value is corrected for a certain original image, the correction is executed by the bitwise operation.

FIG. 10(A) is an example of a data format of the luminance value before the bitwise operation. In this example, the luminance value before the bitwise operation is represented by 12 bits. FIGS. 10(B) and 10(C) are examples of a data format of the luminance value after the bitwise operation. In this example, the luminance value after the bitwise operation is represented by 8 bits. In both of FIGS. 10(B) and 10(C), after the data of FIG. 10(A) is bit-shifted to the LSB side, the number of bits is reduced by discarding specific bits.

The bitwise operation can be performed based on, for example, the exposure condition or the luminance value of the original image. FIG. 10(B) illustrates an example of a case where the luminance value of the original image is relatively low, and the amount of bit shifts is relatively small (1 bit) . FIG. 10(C) illustrates an example of a case where the luminance value of the original image is relatively high, and the amount of bit shifts is relatively large (4 bits). When the luminance of the original image is further low, the amount of bit shifts may be set to zero (that is, the bit shift operation is not substantially performed). In either case, only the bits corresponding to the shifted bits 0 to 7 are retained.

The amount of bit shifts changes in accordance with the conversion coefficient. For example, when the exposure condition of the first original image and the exposure condition of the second original image are greatly different from each other, the conversion coefficient increases. In this case, the amount of bit shifts changes such that a difference between the number of bits of the bit shift with respect to the first original image and the number of bits of the bit shift with respect to the second original image increases. Conversely, when the exposure condition of the first original image and the exposure condition of the second original image are equal or are hardly different, the conversion coefficient becomes zero or decreases. In this case, the amount of the bit shifts changes such that the number of bits of the bit shift with respect to the first original image and the number of bits of the bit shift with respect to the second original image are equal to each other or the difference decreases. In this example, it can be said that the luminance correction unit 504 bit-shifts the luminance value of the second original image in accordance with the exposure condition related to the first original image and the exposure condition related to the second original image when the luminance value of the second original image is corrected. Furthermore, it can be said that the arithmetic operation related to the multiplication is executed by bit-shifting of the luminance value of the second original image in accordance with the exposure condition related to the first original image and the exposure condition related to the second original image when the luminance correction unit 504 executes the multiplication illustrated in FIG. 3.

Furthermore, the processing of FIG. 10 can also be interpreted as an arithmetic operation for reducing the number of bits. For example, in FIG. 10(B), the bits 0 and 9 to 11 are discarded and the number of bits is reduced, and in FIG. 10(C), the bits 8 to 11 are discarded and the number of bits is reduced. As described above, it can be said that the luminance correction unit 504 reduces the number of bits of the luminance value of the second original image in accordance with the exposure condition related to the first original image and the exposure condition related to the second original image when the luminance value of the second original image is corrected. Furthermore, it can be said that the arithmetic operation related to the multiplication is executed by reducing the number of bits of the luminance value of the second original image in accordance with the exposure condition related to the first original image and the exposure condition related to the second original image when the luminance correction unit 504 executes the multiplication illustrated in FIG. 3.

The background difference type object detection unit 505 detects the object by acquiring the background difference based on the image output from the luminance correction unit 504. Furthermore, the parallax type object detection unit 506 detects the object by acquiring parallax based on the image output from the original image acquisition unit 501. Specific contents of processing of these detection units can be appropriately designed by those skilled in the art, and examples thereof will be described below.

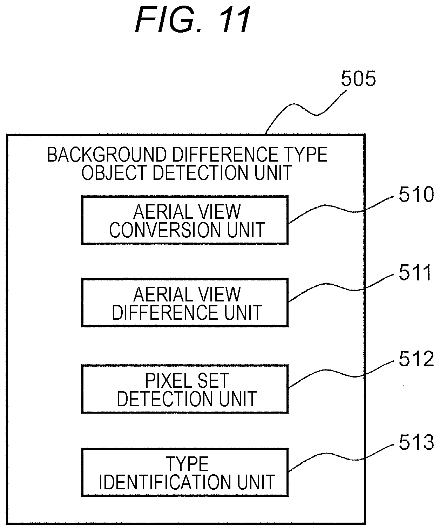

FIG. 11 is a block diagram illustrating an example of a more detailed configuration of the background difference type object detection unit 505. The background difference type object detection unit 505 includes an aerial view conversion unit 510, an aerial view difference unit 511, a pixel set detection unit 512, and a type identification unit 513.

The aerial view conversion unit 510 converts the image output from the luminance correction unit 504 into an aerial view image projected on the road surface while correcting distortion of the lens. The aerial view difference unit 511 acquires a difference between aerial view images of preceding and following shutters. The pixel set detection unit 512 detects, as the object (for example, a three-dimensional object or a moving object), a set of pixels having the difference. The type identification unit 513 identifies a type of the object such as a pedestrian or a vehicle.

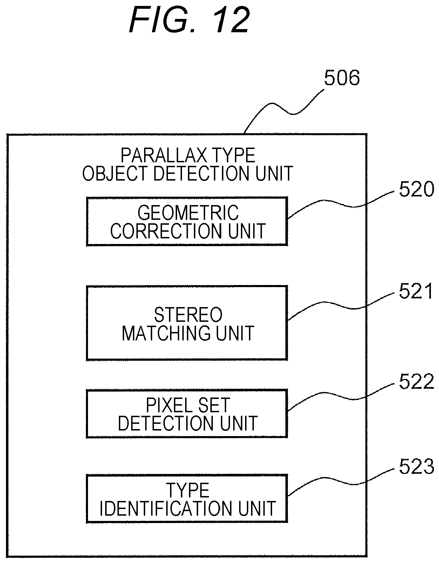

FIG. 12 is a block diagram illustrating an example of a more detailed configuration of the parallax type object detection unit 506. The parallax type object detection unit 506 includes a geometric correction unit 520, a stereo matching unit 521, a pixel set detection unit 522, and a type identification unit 523.

The geometric correction unit 520 corrects distortion at the time of capturing in the sensor unit 11. In this correction, the correction is performed based on distortion information of each of the left imaging unit 12 and the right imaging unit 13. This distortion information is retained in the storage means as a calibration table indicating a position of image coordinates before distortion correction for each pixel in an image coordinate system after distortion correction.

The stereo matching unit 521 specifies a parallax value between corresponding pixels by comparing both left and right images corrected by the geometric correction unit 520. The "corresponding pixels" are pixels in which the same object appears. The parallax value is, for example, 3.2 when the corresponding pixels are shifted by 3.2 pixels on the left and right. For the corresponding pixels, for example, a method for searching for a position at which a value of the sum of absolute differences (SAD) of absolute values of differences in luminance values is the smallest by using a region of a plurality of pixels as a template is used.

The pixel set detection unit 522 detects the object (for example, a three-dimensional object or a moving object) by specifying a set of pixels of the same object based on the parallax value of each pixel output by the stereo matching unit 521. Since the same object is present at the same distance, one set is constituted by a plurality of pixels having close parallax values, and this set represents the object. The type identification unit 523 identifies the type of the object detected by the pixel set detection unit 522. The type is, for example, a vehicle or a pedestrian.

As described above, according to the image processing system 500 and the camera system according to the second embodiment of the present invention, the object can be appropriately detected in the background difference type even though the exposure condition of the camera changes as in the first embodiment. Thus, for example, it is possible to appropriately detect the moving object.

Furthermore, in the second embodiment, the parallax type object detection unit other than the background difference type is provided, and in particular, the parallax type object detection unit 506 detects the object by using the image in a state in which the luminance correction by the luminance correction unit 504 is not performed. In this case, the exposure condition adjustment unit 503 can be configured to decide the exposure condition based on the stereo region of each original image. Furthermore, in this case, the luminance correction unit 504 can be configured to correct the luminance based on the monocular region of each original image. More specifically, the luminance correction unit 504 acquires the luminance-corrected image related to the left imaging unit 12 by correcting the luminance value of the second original image such that the difference in the luminance value in the left monocular region R2 from the first original image decreases for the first original image and the second original image related to the left imaging unit 12, and acquires the luminance-corrected image related to the right imaging unit 13 by correcting the luminance value of the second original image such that the difference in the luminance value in the right monocular region R3 from the first original image decreases for the first original image and the second original image related to the right imaging unit 13.

In this manner, it is possible to use different types of images due to the difference in the type like a case where the exposure adjustment is performed in preference to the parallax type and the correction of the luminance value is performed in order to offset the adjustment in the background difference type. Furthermore, it is possible to realize detection processing suitable for each type.

As modification examples of the first embodiment, the exposure condition adjustment unit can be omitted. The exposure condition may be adjusted by another mechanism or the like independent of the image processing system (for example, as a part of the function of the sensor unit).

Furthermore, a part or all of the aforementioned configurations, functions, processing units, and processing means may be realized by hardware by being designed with an integrated circuit, for example. Furthermore, each of the aforementioned configurations and functions may be realized by software by interpreting and executing a program that realizes each function by the processor. Information of programs, tables, and files for realizing the functions can be stored in a recording device such as a memory, a hard disk, or a solid state drive (SSD), or a recording medium such as an IC card, or an SD card.

Furthermore, control lines and information lines illustrated are considered to be necessary for the description, and not all the control lines and information lines in a product are necessarily illustrated. Almost all the configurations may be considered to be actually connected to each other.

Reference Signs List

10 sensor unit (camera)
11 sensor unit (stereo camera)
12 left imaging unit (imaging unit)
13 right imaging unit (imaging unit)
100, 500 image processing system
101, 501 original image acquisition unit
102, 502 exposure amount acquisition unit
103, 503 exposure condition adjustment unit
104, 504 luminance correction unit
105, 505 background difference type object detection unit
506 parallax type object detection unit (non-background difference type object detection unit)
201, 301 original image
202, 302 luminance-corrected image
203, 303 difference image
401 exposure time
402 luminance value
R1 stereo region
R2 left monocular region
R3 right monocular region

All publications, patents, and patent applications cited in the present specification are hereby incorporated by reference in the present specification.

Claims

1. An image processing system (100, 500), comprising:

an original image acquisition unit (101, 501) that acquires a first original image and a second original image;
a luminance correction unit (104, 504) that acquires a luminance-corrected image by correcting a luminance value of the second original image such that a difference from a luminance value of the first original image decreases in accordance with an exposure condition related to each of the original images; and
a background difference type object detection unit (105, 505) that detects an object by acquiring a background difference based on the luminance-corrected image,

wherein the original image acquisition unit (101, 501) acquires the first original image and the second original image related to a plurality of different positions,

each of the original images includes a stereo region and a monocular region, the stereo region is a region in which angles of view overlap between the original images related to the different positions, and the monocular region is a region in which the angles of view do not overlap between the original images related to the different positions,

the image processing system (100, 500) includes an exposure condition adjustment unit (103, 503) that decides the exposure condition based on the stereo region of each of the original images, and

the luminance correction unit (104, 504) acquires the luminance-corrected image related to one position by correcting the luminance value of the second original image related to said position such that a difference in the luminance value from the first original image related to said position in the monocular region related to said position decreases.

2. The image processing system (100, 500) according to claim 1, wherein the luminance correction unit (104, 504) bit-shifts the luminance value of the second original image in accordance with the exposure condition related to each of the original images.

3. The image processing system (100, 500) according to claim 1, wherein the luminance correction unit (104, 504) reduces the number of bits of the luminance value of the second original image in accordance with the exposure condition related to each of the original images.

4. The image processing system (100, 500) according to claim 1, wherein

   the exposure condition includes information representing an exposure time, and
   the luminance correction unit (104, 504) multiplies the luminance value of the second original image by a ratio of an exposure time related to the first original image to an exposure time related to the second original image.

5. The image processing system (100, 500) according to claim 4, wherein the luminance correction unit (104, 504) executes an arithmetic operation related to the multiplication by bit-shifting the luminance value of the second original image in accordance with the exposure condition related to each of the original images.

6. The image processing system (100, 500) according to claim 4, wherein the luminance correction unit (104, 504) executes the arithmetic operation related to the multiplication by reducing the number of bits of the luminance value of the second original image in accordance with the exposure condition related to each of the original images.

7. The image processing system (100, 500) according to claim 1, further comprising a non-background difference type object detection unit (506) that detects an object without acquiring a background difference based on any of the original images, wherein the non-background difference type object detection unit (506) is an object detection unit different from the background difference type object detection unit (105, 505) .

8. A camera system comprising:

   the image processing system (100, 500) according to claim 1; and
   a camera (10),
   wherein the original image is a shutter image of the camera.

9. A camera system comprising:

   the image processing system (100, 500) according to claim 1; and
   a stereo camera (11),
   wherein the original image acquisition unit (101, 501) acquires a plurality of original images related to different times, which is captured by a plurality of imaging units (12, 13) in the stereo camera, and
   the original images are shutter images of the imaging units (12, 13).

**Patentansprüche**

1. Bildverarbeitungssystem (100, 500), das umfasst:

   eine Einheit zur Erfassung eines Originalbildes (101, 501), die ein erstes Originalbild und ein zweites Originalbild erfasst;
   eine Helligkeitskorrektureinheit (104, 504), die ein helligkeitskorrigiertes Bild durch Korrigieren eines Helligkeitswerts des zweiten Originalbildes erfasst, so dass ein Unterschied von einem Helligkeitswert des ersten Originalbildes in Übereinstimmung mit einer Belichtungsbedingung bezüglich jedes der Originalbilder abnimmt; und
   eine Einheit zur Detektion eines Objekts vom Hintergrundunterschiedstyp (105, 505), die ein Objekt durch Erfassen eines Hintergrundunterschieds anhand des helligkeitskorrigierten Bildes detektiert,
wobei die Einheit zur Erfassung eines Originalbildes (101, 501) das erste Originalbild und das zweite Originalbild bezüglich mehrerer verschiedener Positionen erfasst,
wobei jedes der Originalbilder einen Stereobereich und einen Monokularbereich enthält, wobei der Stereobereich ein Bereich ist, in dem sich Sichtwinkel zwischen den Originalbildern bezüglich der verschiedenen Positionen überdecken, und der Monokularbereich ein Bereich ist, in dem sich die Sichtwinkel zwischen den Originalbildern bezüglich mehrerer Positionen nicht überdecken,
wobei das Bildverarbeitungssystem (100, 500) eine Belichtungsbedingungsanpassungseinheit (103, 503) enthält, die die Belichtungsbedingung anhand des Stereobereichs jedes der Originalbilder bestimmt, und
die Helligkeitskorrektureinheit (104, 504) das helligkeitskorrigierte Bild bezüglich einer Position durch Korrigieren des Helligkeitswerts des zweiten Originalbildes bezüglich der Position derart erfasst, dass ein Unterschied des Helligkeitswerts von dem ersten Originalbild bezüglich der Position in dem Monokularbereich bezüglich der Position abnimmt.

2. Bildverarbeitungssystem (100, 500) nach Anspruch 1, wobei die Helligkeitskorrektureinheit (104, 504) den Helligkeitswert des zweiten Originalbildes in Übereinstimmung mit der Belichtungsbedingung bezüglich jedes der Originalbilder bitweise verschiebt.

3. Bildverarbeitungssystem (100, 500) nach Anspruch 1, wobei die Helligkeitskorrektureinheit (104, 504) die Anzahl von Bits des Helligkeitswerts des zweiten Originalbildes in Übereinstimmung mit der Beleuchtungsbedingung bezüglich jedes der Originalbilder verringert.

4. Bildverarbeitungssystem (100, 500) nach Anspruch 1, wobei

die Belichtungsbedingung Informationen enthält, die eine Belichtungszeit repräsentieren, und
die Helligkeitskorrektureinheit (104, 504) den Helligkeitswert des zweiten Originalbildes mit einem Verhältnis einer Belichtungszeit bezüglich des ersten Originalbildes zu einer Belichtungszeit bezüglich des zweiten Originalbildes multipliziert.

5. Bildverarbeitungssystem (100, 500) nach Anspruch 4, wobei die Helligkeitskorrektureinheit (104, 504) eine arithmetische Operation bezüglich der Multiplikation durch bitweises Verschieben des Helligkeitswerts des zweiten Originalbildes in Übereinstimmung mit der Belichtungsbedingung bezüglich jedes der Originalbilder ausführt.

6. Bildverarbeitungssystem (100, 500) nach Anspruch 4, wobei die Helligkeitskorrektureinheit (104, 504) die arithmetische Operation bezüglich der Multiplikation durch Verringern der Anzahl von Bits des Helligkeitswerts des zweiten Originalbildes in Übereinstimmung mit der Belichtungsbedingung bezüglich jedes der Originalbilder ausführt.

7. Bildverarbeitungssystem (100, 500) nach Anspruch 1, das ferner eine Einheit zur Detektion eines Objekts, die nicht vom Hintergrundunterschiedstyp ist, (506) umfasst, die ein Objekt anhand eines der Originalbilder detektiert, ohne einen Hintergrundunterschied zu erfassen,
wobei die Einheit zur Detektion eines Objekts, die nicht vom Hintergrundunterschiedstyp ist, (506) eine Einheit zur Detektion eines Objekts ist, die von der Einheit zur Detektion eines Objekts vom Hintergrundunterschiedstyp (105, 505) verschieden ist.

8. Kamerasystem, das umfasst:

das Bildverarbeitungssystem (100, 500) nach Anspruch 1; und
eine Kamera (10),
wobei das Originalbild ein Verschlussbild der Kamera ist.

9. Kamerasystem, das umfasst:

das Bildverarbeitungssystem (100, 500) nach Anspruch 1; und
eine Stereokamera (11),
wobei die Einheit zur Erfassung eines Originalbildes (101, 501) mehrere Originalbilder bezüglich verschiedener Zeiten erfasst,
die durch mehrere Abbildungseinheiten (12, 13) in der Stereokamera aufgenommen werden, und
die Originalbilder Verschlussbilder der Abbildungseinheiten (12, 13) sind.

**Revendications**

1. Système de traitement d'image (100, 500), comprenant :

une unité d'acquisition d'image d'origine (101, 501) qui acquiert une première image d'origine et une seconde image d'origine ;
une unité de correction de luminance (104, 504) qui acquiert une image à luminance corrigée en corrigeant une valeur de luminance de la seconde image d'origine de telle sorte qu'une différence par rapport à une valeur de luminance de la première image d'origine diminue selon une condition d'exposition en lien avec chacune des images d'origine ; et

une unité de détection d'objet du type avec différence d'arrière-plan (105, 505) qui détecte un objet en acquérant une différence d'arrière-plan sur la base de l'image à luminance corrigée,

dans lequel l'unité d'acquisition d'image d'origine (101, 501) acquiert la première image d'origine et la seconde image d'origine en lien avec une pluralité de positions différentes,

chacune des images d'origine inclut une région stéréoscopique et une région monoculaire, la région stéréoscopique étant une région dans laquelle des angles de vue se chevauchent entre les images d'origine en lien avec les positions différentes, et la région monoculaire étant une région dans laquelle les angles de vue ne se chevauchent pas entre les images d'origine en lien avec les positions différentes, le système de traitement d'image (100, 500) inclut une unité d'ajustement de condition d'exposition (103, 503) qui décide de la condition d'exposition sur la base de la région stéréoscopique de chacune des images d'origine, et

l'unité de correction de luminance (104, 504) acquiert l'image à luminance corrigée en lien avec une position en corrigeant la valeur de luminance de la seconde image d'origine en lien avec la disposition de telle sorte qu'une différence dans la valeur de luminance par rapport à la première image origine en lien avec ladite position dans la région monoculaire en lien avec ladite position diminue.

2. Système de traitement d'image (100, 500) selon la revendication 1, dans lequel l'unité de correction de luminance (104, 504) effectue un décalage de bits de la valeur de luminance de la seconde image d'origine selon la condition d'exposition en lien avec chacune des images d'origine.

3. Système de traitement d'image (100, 500) selon la revendication 1, dans lequel l'unité de correction de luminance (104, 504) réduit le nombre de bits de la valeur de luminance de la seconde image d'origine selon les conditions d'exposition en lien avec chacune des images d'origine.

4. Système de traitement d'image (100, 500) selon la revendication 1, dans lequel

la condition d'exposition inclut des informations représentant un temps d'exposition, et

l'unité de correction de luminance (104, 504) multiplie la valeur de luminance de la seconde image d'origine par un rapport d'un temps d'exposition en lien avec la première image d'origine sur un temps d'exposition en lien avec la seconde image d'origine.

5. Système de traitement d'image (100, 500) selon la revendication 4, dans lequel l'unité de correction de luminance (104, 504) exécute une opération arithmétique en lien avec la multiplication en effectuant un décalage de bits de la valeur de luminance de la seconde image d'origine selon la condition d'exposition en lien avec chacune des images d'origine.

6. Système de traitement d'image (100, 500) selon la revendication 4, dans lequel l'unité de correction de luminance (104, 504) exécute l'opération arithmétique en lien avec la multiplication en réduisant le nombre de bits de la valeur de luminance de la seconde image origine selon la condition d'exposition en lien avec chacune des images d'origine.

7. Système de traitement d'image (100, 500) selon la revendication 1, comprenant en outre une unité de détection d'objet du type sans différence d'arrière-plan (506) qui détecte un objet sans acquérir une différence d'arrière-plan sur la base de l'une quelconque des images origine,

dans lequel d'objet du type sans différence d'arrière-plan (506) est une unité de détection d'objet différente de l'unité de détection d'objet du type avec différence d'arrière-plan (105, 505).

8. Système de caméra comprenant :

le système de traitement d'image (100, 500) selon la revendication 1 ; et
une caméra (10),
dans lequel l'image d'origine est une image d'obturateur de la caméra.

9. Système de caméra comprenant :

le système de traitement d'image (100, 500) selon la revendication 1 ; et
une caméra stéréoscopique (11),
dans lequel l'unité d'acquisition d'image d'origine (101, 501) acquiert une pluralité d'images d'origine en lien avec des temps différents, qui sont capturées par une pluralité d'unités d'imagerie (12, 13) dans l'image stéréoscopique, et les images d'origine sont des images d'obturateur des unités d'imagerie (12, 13).

# FIG. 1

SENSOR UNIT — 10

IMAGE PROCESSING SYSTEM — 100

110 — ARITHMETIC OPERATION MEANS

120 — STORAGE MEANS

# FIG. 2

100

| ORIGINAL IMAGE ACQUISITION UNIT | → | EXPOSURE AMOUNT ACQUISITION UNIT |
|---|---|---|

101

102

| LUMINANCE CORRECTION UNIT | ← | EXPOSURE CONDITION ADJUSTMENT UNIT |
|---|---|---|

104

103

| BACKGROUND DIFFERENCE TYPE OBJECT DETECTION UNIT |
|---|

105

# FIG. 3

$$\text{LUMINANCE VALUE OF LUMINANCE-CORRECTED IMAGE RELATED TO SECOND ORIGINAL IMAGE} = \text{LUMINANCE VALUE OF SECOND ORIGINAL IMAGE} \times \frac{\text{EXPOSURE TIME OF FIRST ORIGINAL IMAGE}}{\text{EXPOSURE TIME OF SECOND ORIGINAL IMAGE}}$$

# FIG. 4

# FIG. 5

## FIG. 6

# FIG. 7

SENSOR UNIT — 11

12 — LEFT IMAGING UNIT    RIGHT IMAGING UNIT — 13

IMAGE PROCESSING SYSTEM — 500

ARITHMETIC OPERATION MEANS

STORAGE MEANS

## FIG. 8

# FIG. 9

500

| ORIGINAL IMAGE ACQUISITION UNIT | 501 |
| EXPOSURE AMOUNT ACQUISITION UNIT | 502 |

| LUMINANCE CORRECTION UNIT | 504 |
| EXPOSURE CONDITION ADJUSTMENT UNIT | 503 |

| PARALLAX TYPE OBJECT DETECTION UNIT | 506 |
| BACKGROUND DIFFERENCE TYPE OBJECT DETECTION UNIT | 505 |

# FIG. 10

MSB

| | BIT 11 |
|---|---|
| | BIT 10 |
| | BIT 9 |
| | BIT 8 |
| | BIT 7 |
| | BIT 6 |
| | BIT 5 |
| | BIT 4 |
| | BIT 3 |
| | BIT 2 |
| | BIT 1 |

LSB | BIT 0 |

| BIT 7 |
|---|
| BIT 6 |
| BIT 5 |
| BIT 4 |
| BIT 3 |
| BIT 2 |
| BIT 1 |
| BIT 0 |

| BIT 7 |
|---|
| BIT 6 |
| BIT 5 |
| BIT 4 |
| BIT 3 |
| BIT 2 |
| BIT 1 |
| BIT 0 |

(A)         (B)         (C)

# FIG. 11

505

BACKGROUND DIFFERENCE TYPE
OBJECT DETECTION UNIT

AERIAL VIEW
CONVERSION UNIT — 510

AERIAL VIEW
DIFFERENCE UNIT — 511

PIXEL SET
DETECTION UNIT — 512

TYPE
IDENTIFICATION UNIT — 513

# FIG. 12

506

PARALLAX TYPE
OBJECT DETECTION UNIT

GEOMETRIC
CORRECTION UNIT — 520

STEREO
MATCHING UNIT — 521

PIXEL SET
DETECTION UNIT — 522

TYPE
IDENTIFICATION UNIT — 523

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011060167 A
- JP 2011070572 A
- JP 2004274325 A
- JP 2019009090 A